(19) Europäisches Patentamt
European Patent Office
Office européen des brevets

(11) **EP 2 449 640 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **10720881.1**

(22) Anmeldetag: **03.05.2010**

(51) Int Cl.:
*H02G 5/06* (2006.01)   *H01B 9/06* (2006.01)
*H01B 17/18* (2006.01)

(86) Internationale Anmeldenummer:
**PCT/EP2010/002677**

(87) Internationale Veröffentlichungsnummer:
**WO 2011/000446 (06.01.2011 Gazette 2011/01)**

(54) **VERSTELLBARE STUTZISOLATOR FÜR EINE HOCHSPANNUNGSFERNÜBERTRAGUNGSLEITUNG**

ADJUSTABLE SUPPORTING INSULATOR FOR LONG DISTANCE HIGH VOLTAGE LINE

ISOLATEUR DE SUPPORT REGLABLE POUR LIGNE DE HAUTE TENSION À GRANDE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **01.07.2009 DE 102009031245**

(43) Veröffentlichungstag der Anmeldung:
**09.05.2012 Patentblatt 2012/19**

(73) Patentinhaber: **Lapp Insulators GmbH**
**95632 Wunsiedel (DE)**

(72) Erfinder: **SEIFERT, Jens**
**95632 Wundsiedel (DE)**

(74) Vertreter: **FDST Patentanwälte**
**Nordostpark 16**
**90411 Nürnberg (DE)**

(56) Entgegenhaltungen:
**EP-A1- 0 572 096    DE-A1-102004 030 527**
**JP-A- 10 126 911    JP-A- 10 164 737**
**US-A- 2 973 405     US-A- 3 712 953**

EP 2 449 640 B1

## Beschreibung

Die Erfindung betrifft einen Halteisolator mit den Merkmalen des Oberbegriffs des Anspruchs 1 sowie eine Fernübertragungsleitung für Hochspannung, mit einem sich in einer Längsrichtung erstreckenden äußeren Mantelrohr, mit einem im Inneren des Mantelrohrs parallel zur Längsrichtung geführten Innenleiter und mit einer Anzahl von stabförmigen Halteisolatoren, über die der Innenleiter quer zur Längsrichtung am Mantelrohr und von diesem beabstandet über eine Gewindeverbindungen gehalten ist. Die Erfindung betrifft weiter einen Halteisolator zur beabstandeten Befestigung eines Innenleiters im Inneren eines Mantelrohrs, insbesondere bei einer entsprechend ausgebildeten Fernübertragungsleitung.

Eine derartige Übertragungsleitung sowie ein derartiger Halteisolator sind aus der US 3 712 953 A zu entnehmen.

Eine Fernübertragungsleitung der vorgenannten Art ist beispielsweise aus dem Vortrag "Gasisolierter Rohrleiter (GIL) für Hochspannungsübertragungen", Josef Kindersberger, IEEE Joint IAS/PELS/IES and PES German Chapter Meeting, Goldisthal, 14.10.2005 bekannt. Eine derartige Fernübertragungsleitung dient der Übertragung von Hochspannung, insbesondere als eine technische Alternative für eine Freileitung. Dabei befindet sich der Innenleiter auf Hochspannung, während das Mantelrohr geerdet ist. In regelmäßigen Abständen entlang der Längs- bzw. Übertragungsrichtung sind im Inneren des Mantelrohrs Halteisolatoren vorgesehen, die den Innenleiter gegenüber dem Mantelrohr abstützen und die Spannungsdifferenz isolieren.

Eine derartige Fernübertragungsleitung ist zwar gegenüber einer Freileitung kostenintensiver, bedarf jedoch eines wesentlich geringeren Wartungsaufwands, da der Innenleiter keinen äußeren Verschmutzungs- und Witterungseinflüssen unterliegt. Insbesondere erfüllt eine derartige Rohrleitung auch hohe Sicherheitsanforderungen, da sie gegenüber Bränden oder sonstigen Umweltkatastrophen vergleichsweise unempfindlich ist. Die Fernübertragungsleitung gemäß der vorgenannten Publikation ist zur Isolierung im Inneren mit einem Schutzgas, insbesondere einem $N_2$-$SF_6$-Gasgemisch, gefüllt.

Die beschriebene Rohrleitung kann unterirdisch oder in Freiluft verlegt werden. Der als Rohrleiter ausgeführte Innenleiter der offenbarten Fernübertragungsleitung führt eine Wechselspannung. Zur Abstützung der Innenleitung sind Stützisolatoren, Scheibenstützer und Schottstützer beschrieben. Letztere erfüllen insbesondere die Aufgabe, bei einer Beschädigung das Austreten von Schutzgas zu beschränken, da sie den Innenraum in regelmäßigen Abständen abschotten.

Das Vorsehen von Schutzgas mit einem erhöhten Isoliervermögen ermöglicht es, die gezeigte Rohrleitung mit kleineren Durchmessern auszuführen. Auf der anderen Seite muss die Leitung insgesamt dicht gehalten werden, was insbesondere an Verbindungsstellen zwischen einzelnen Abschnitten oder Teilen der Fernübertragungsleitung zu einem nicht unerheblichen Aufwand führt.

Aus der EP 0 572 096 A1 ist ein Sammelschienen-Leitersystem für Hochvoltanwendungen zu entnehmen, bei dem innerhalb eines rohrförmigen Gehäuses drei Leiter um 120° drehversetzt zueinander angeordnet sind, die jeweils von einem Stützisolator gehalten sind. Die einzelnen Stützisolatoren sind wiederum an einem gemeinsamen zentralen Stützkörper befestigt, der sich über Fixierarme mittels einer Schraubverbindung an der Innenwand des Gehäuses abstützt.

Aus der US 3 712 953 A ist weiterhin ein elektrisches Verteilersystem für Hochvoltanwendungen zu entnehmen, bei dem innerhalb eines rohrförmigen Gehäuses zumindest zwei Leiterschienen geführt sind, die über einen Verbindungssteg miteinander verbunden sind. Der Verbindungssteg ist über stab- oder rohrförmige Isolatoren am Gehäuse befestigt. Hierzu werden die Isolatoren durch das Gehäuse hindurchgeführt und von außen mittels einer Mutter befestigt.

Aufgabe der Erfindung ist es, eine Fernübertragungsleitung der eingangs genannten Art hinsichtlich ihrer Einsatzmöglichkeiten, ihrer Wartung und ihrer Verlegung weiter zu verbessern. Insbesondere sollen für eine derartige Fernübertragungsleitung auch hinsichtlich dieser Aufgabe verbesserte Halteisolatoren zur Führung des Innenleiters im Mantelrohr angegeben werden.

Die erstgenannte Aufgabe wird für eine Fernübertragungsleitung für Hochspannung mit einem sich in einer Längsrichtung erstreckenden äußeren Mantelrohr, mit einem im Inneren des Mantelrohrs parallel zur Längsrichtung geführten Innenleiter und mit einer Anzahl von Halteisolatoren, über die der Innenleiter quer zur Längsrichtung am Mantelrohr und von diesem beabstandet gehalten ist, erfindungsgemäß dadurch gelöst, dass die Halteisolatoren zur Justage des Abstands zwischen dem Innenleiter und dem Mantelrohr ausgebildet sind.

Die Erfindung geht dabei generell von dem Ansatz aus, dass die Verlegung des Innenleiters im Inneren des Mantelrohrs mit nicht unerheblichen Problemen verbunden ist. Dabei muss zum einen ein Mindestabstand zwischen dem Innenleiter und dem Mantelrohr eingehalten werden, damit es im Inneren der Leitung nicht zu Spannungsüberschlägen kommt. Mit anderen Worten sollte der Innenleiter im Mantelrohr etwa mittig verlaufen, bzw. im Falle eines Rundrohres koaxial zu diesem verlegt sein, so dass ein gleichbleibender Abstand gegenüber dem umgebenden Mantelrohr gewährleistet ist. Die Erfindung erkennt hierbei, dass eine Justiermöglichkeit des Innenleiters eine bedeutende Erleichterung bei der Verlegung der Fernübertragungsleitung und einen wesentlichen Beitrag zur Erhöhung der Sicherheit liefert, da nun Fertigungstoleranzen bei der Montage ausgeglichen oder gekrümmte Verlegungsabschnitte ausreichend berücksichtigt werden können.

Gerade auch bei einem Übergang zu größeren Durchmessern des Mantelrohrs, die insbesondere bei einem Verzicht auf Schutzgas aus Kostengründen erforderlich werden, um einen Spannungsüberschlag in Luft zu verhindern, ist eine Einstellmöglichkeit für den Innenleiter wünschenswert. Der Übergang von Schutzgas zu Luft hat hierbei zwar den Nachteil, dass die Fernübertragungsleitung insgesamt in ihren Ausmaßen vergrößert ist. Jedoch ist eine solche luftisolierte Rohrleitung gewissermaßen wartungsfrei, da ein Austritt von Schutzgas gar nicht verhindert werden muss. Insofern kann eine solche Fernübertragungsleitung über große Strecken auch durch unwegsames Gelände verlegt werden, wobei dennoch die Übertragungssicherheit gewährleistet ist. Dabei müssen weder Freileitungsmasten gesetzt, noch eine Sicherheitsschneise gegenüber der spannungsführenden Freileitung regelmäßig von nachwachsender Vegetation frei gehalten werden. Gerade für diesen Zweck ist insbesondere eine Vereinfachung der Verlegung wünschenswert, um die Kosten weiter zu senken.

Die Erfindung geht nun weiter davon aus, dass eine Justagemöglichkeit für den Innenleiter in einfacher Art und Weise dadurch möglich wird, dass der den Innenleiter haltende Halteisolator zur Justage des Abstands zwischen dem Innenleiter und dem Mantelrohr ausgebildet wird. Über eine solche Möglichkeit kann dann bei der Verlegung, wobei die Halteisolatoren ohnehin eingesetzt werden müssen, der Innenleiter gleich bei seiner Montage entsprechend ausgerichtet werden. Der Halteisolator übernahm gewissermaßen die Funktion eines Spannschlosses für den Innenleiter. Hierzu kann der Isolator beispielsweise als ein Stützisolator ausgebildet sein, der einen längenvariablen Abschnitt aufweist. Die Länge des veränderbaren Abschnitts kann hierzu beispielsweise mittels eines geeigneten Werkzeugs eingestellt und arretiert werden. Vorstellbar ist hierbei ein Verschiebe- oder Spindelverstellmechanismus. Auch kann eine drehbare Gewindeverbindung an einem Ende des Halteisolators vorgesehen sein, wobei das andere Ende des Halteisolators fest mit dem Innenleiter oder dem Mantelrohr verbunden wird.

Weiterhin sind die Halteisolatoren im Wesentlichen stabförmig ausgebildet und mit dem Innenleiter sowie dem Mantelrohr jeweils über eine Gewindeverbindung verschraubt, wobei die Gewindeverbindungen am Innenleiter und am Mantelrohr zueinander einen entgegengesetzten Drehsinn aufweisen. Auf diese Weise ergibt sich eine überraschend einfache Verstellmöglichkeit für den Abstand zwischen dem Innenleiter und dem Mantelrohr. Je nach Drehsinn des Halteisolators um seine Längsachse schraubt sich dieser entweder an beiden Enden in die Befestigungsstellen am Innenleiter bzw. am Mantelrohr hinein oder aus den Befestigungsstellen heraus. Über eine simple Drehung des stabförmigen Halteisolators kann insofern die Position des Innenleiters gegenüber dem Mantelrohr exakt und wunschgemäß ausgerichtet werden. Der Halteisolator wird an den Gewindeverbindungen wie vorgesehen, insbesondere wie durch eine entsprechende Markierung angezeigt, bis zu einer Sollposition eingeschraubt, und anschließend werden Fertigungstoleranzen, Verkrümmungen oder dergleichen durch Weiter- oder Rückschrauben ausgeglichen. Die Verlegung des Innenleiters im Mantelrohr wird hierdurch wesentlich vereinfacht. Durch die spiegelsymmetrische Ausgestaltung der beiden Metallarmaturen verringern sich zusätzlich die Herstellkosten für den Halteisolator.

Grundsätzlich können die Halteisolatoren auch als Keramikisolatoren ausgeführt sein. Um eine hohe Isolierung bei gleichzeitig stabiler mechanischer Festigkeit zu erzielen, sind die Halteisolatoren jedoch jeweils als sogenannte Verbundisolatoren mit einem im Wesentlichen stabförmigen Glasfaserstrunk und mit einer darauf aufgebrachten Isoliermasse, insbesondere aus einem Silikonkautschuk, ausgeführt. Der Glasfaserstrunk leistet die notwendige mechanische Stabilität. Insbesondere ist dieser auch gegen eine Verdrehung, wie zur vorgenannten Justage erforderlich, unempfindlich. Über die auf den Strunk aufgebrachte Isoliermasse wird die Isolierfähigkeit erhöht. Zudem kann hierbei durch eine entsprechende chemische Auslegung der Isoliermasse die Verschmutzungsneigung gegenüber Fremdpartikeln, Feuchtigkeit oder dergleichen verbessert werden.

Entsprechend der Dimension der Rohrleitung, der zu isolierender Spannungsdifferenz oder des zu erwartenden Betauungszustands ist der Kriechweg über die Oberfläche des eingesetzten Verbundisolators zu bemessen. Die auf den Glasfaserstrunk aufgebrachte Isoliermasse kann insofern mit oder ohne Schirme ausgestaltet sein, die den Strunk beispielsweise tellerförmig oder schraubenförmig umgeben. Dabei hängen die Größe und die Anzahl der Schirme von der vorgesehenen Kriechwegbemessung ab. Die Schirme können insbesondere auch nur entlang eines Teilabschnitts des Verbundisolators vorgesehen sein.

Die Halteisolatoren sind beidendseitig jeweils mit einer Metallarmatur versehen, die jeweils ein Gewinde aufweisen. Der Drehsinn der Gewinde der beiden Metallarmaturen zueinander ist hierbei entgegengesetzt. Die Metallarmaturen sind dabei mit dem restlichen Isolierkörper beispielsweise verklebt, mit einer Schrumpfverbindung angebunden oder in Kombination damit schrumpfverklebt.

Das Gewinde der Metallarmaturen kann jeweils sowohl als ein Innen- als auch als ein Außengewinde ausgeführt sein. Da ein Innengewinde jedoch auf Seite des Innenleiters und des Mantelrohrs zusätzlich Anbindungsstellen in Form von Gewindestiften erforderlich macht, ist die Ausbildung der Armaturenenden in Form von Gewindestangen oder Gewindebolzen zu bevorzugen. Da Gewindestangen in die Gewindebohrungen am Innenleiter und am Mantelrohr eintauchen, können an der Befestigungsstelle vorstehende Kanten und Ecken vermieden werden, was hinsichtlich Koronaentladungen von Vorteil ist.

Weiterhin ist an wenigstens einer Metallarmatur ein Mehrkant zur Drehung des jeweiligen Halteisolators ausgebildet. Ein solcher Mehrkant kann beispielsweise mittels eines einfachen Maul- oder Gabelschlüssels aufgenommen und hiermit der Halteisolator insgesamt um seine Längsachse zur Justage des Innenleiters verdreht werden.

Im Falle eines Verbundisolators ist es zweckmäßig, weil hierdurch eine besonders innige und dennoch einfach herzustellende Verbindung geschaffen wird, die Metallarmatur mit dem Mehrkant herzustellen und mittels des Mehrkants am Strunk zu befestigen, wobei der Mehrkant zumindest teilweise über das Strunkende geschoben, und dem Strunkende aufgepresst und/oder aufgeklebt ist. Mit anderen Worten erhält der Mehrkant einen Innendurchmesser, der in etwa dem Außendurchmesser des Strunkendes entspricht. Zur Herstellung eines Presssitzes wird der Innendurchmesser des Mehrkants geringfügig kleiner als der Außendurchmesser des Strunkendes hergestellt. Die Metallarmatur wird erwärmt, wodurch sich der Innendurchmesser des Mehrkants aufweitet, so dass dieser über das Strunkende geschoben werden kann. Während des Abkühlens reduziert sich der Innendurchmesser auf die ursprünglichen Maße, wodurch die Metallarmatur durch einen Presssitz fest mit dem Strunk verbunden ist. Alternativ oder zusätzlich zu einem Presssitz kann der Mehrkant mit seinem Innendurchmesser mittels eines geeigneten Klebers, insbesondere einem Epoxidharzkleber, fest mit dem Strunkende verklebt werden. Zum Herstellen von Klebstofftaschen, welche zu einem besonders festen Halt führen, kann das Strunkende oder die Innenseite des Mehrkants mit umlaufenden Riefen oder Vertiefungen versehen sein.

Bei der vorbeschriebenen Verbindungstechnik ist die Metallarmatur insbesondere im Wesentlichen nach Art einer Gewindestange ausgebildet, die an ihrem isolatorseitigen Ende einen entsprechend ausgestalteten hohlen Außenmehrkant umfasst. Eine solche Metallarmatur lässt sich mit bekannten spanenden oder spanlosen Herstellungstechniken vergleichsweise günstig herstellen. Diese trifft natürlich auch für eine vorgenannte Ausbildung des Halteisolators zu, wobei nur an einem Ende eine Metallarmatur mit einer Gewindeverbindung vorgesehen ist.

Das Mantelrohr umfasst eine Anzahl von nach außen gerichteten Aufnahmebuchsen, in die jeweils die äußeren Gewindeverbindungen der Halteisolatoren aufgenommen sind. Alternativ oder zusätzlich umfasst weiter bevorzugt der Innenleiter eine Anzahl von nach innen gerichteten Aufnahmebuchsen, in die jeweils die inneren Gewindeverbindungen der Halteisolatoren aufgenommen sind.

Das Vorsehen von Aufnahmebuchsen, in die die Gewindeverbindungen aufgenommen sind, eröffnet die Möglichkeit, für Spannungs- oder Koronaenladungen nachteilige Ecken und Kanten zu vermeiden. Tauchen die Gewindeverbindungen in die Aufnahmebuchsen ein, so entsteht im Inneren der Fernübertragungsleitung ein verhältnismäßig glatter Übergang zwischen den in Längsrichtung verlaufenden Innenwänden des Innenleiters und des Mantelrohrs gegenüber den quer eingeschraubten Halteisolatoren.

Der Innenleiter kann als ein Massivleiter oder als ein Rohrleiter ausgebildet sein. Im Falle eines massiven Innenleiters werden dessen Aufnahmebuchsen aus diesem beispielsweise durch Herausdrehen oder dergleichen hergestellt. Mit anderen Worten sind die Aufnahmebuchsen des Innenleiters dann in diesen hineingearbeitet. Im Falle eines hohlen Innenleiters oder im Falle des Mantelrohrs sind die Aufnahmebuchsen dann durch entsprechende Einsenkungen aus dem Material herausgeformt. Dabei werden sich die herausgeformten Aufnahmebuchsen radial bis über den Außendurchmesser des Mantelrohrs hinaus erstrecken. Mithin sind die Aufnahmebuchsen gegebenenfalls von außen sichtbar.

In besonderem Maße sind in den Aufnahmebuchsen zusätzlich die Mehrkante der Halteisolatoren aufgenommen, wobei die Mehrkante jeweils mindestens so weit eintauchen, dass ihre isolatorseitigen Endkanten mit den jeweiligen Auslaufkanten der Aufnahmebuchsen fluchten. Damit fungiert die jeweils gewölbte Auslaufzone an der Verbindungsstelle der Halteisolatoren gleichzeitig als eine Feldsteuerung und als ein Koronaschutz für die jeweilige Metallarmatur. Die Eindrehung der Mehrkante in die entsprechenden Aufnahmebuchsen kann beispielsweise mittels eines geeigneten Steckschlüssels oder dergleichen vorgenommen werden. Die Aufnahmebuchse ist in diesem Fall nach Art eines Sacklochs mit einem genügend großen Durchmesser zur Aufnahme des Außenmehrkants ausgebildet. Am Boden des Sacklochs ist eine Gewindebohrung eingelassen ist, in die die Metallarmatur mit ihrem Gewinde eindrehbar ist.

In einer besonders vorteilhaften Ausgestaltung der Fernübertragungsleitung ist der Innenleiter gegenüber dem Mantelrohr luftisoliert. Gegenüber einer Isolierung mittels Schutzgas werden hierdurch zwar die Abmessungen zur Vermeidung eines Spannungsüberschlags größer zu dimensionieren sein, jedoch muss die Fernübertragungsleitung insgesamt bzw. deren Einzelabschnitte nicht gasdicht hergestellt sein. Eine solche Fernübertragungsleitung ist somit wesentlich weniger wartungsaufwändig als eine schutzgasisolierte Rohrleitung. Druckabfallsensoren sowie eine zentrale Leitwarte zum Feststellen eines lokalen Druckabfalls sind nicht erforderlich. Eine luftisolierte Fernübertragungsleitung mit einem im Inneren des Mantelrohrs geführten Innenleiter ist mithin für eine Spannungsübertragung über weite Strecken durch unwegsames Gelände geeignet. Die Leitung kann insbesondere in Freiluft ebenerdig durch Gebiete mit üppiger Vegetation oder durch Wüstengebiete verlegt werden.

Die angegebene Fernübertragungsleitung eignet sich grundsätzlich sowohl zur Übertragung einer Wechselspannung als auch einer Gleichspannung. Bei einer Übertragung über lange Strecken ist die Fernübertragungsleitung bevorzugt zur Übertragung einer Gleichspannung ausgelegt. Bei einer Wechselspannung kommt es aufgrund der gegenüber einer Freileitung erhöhten Betriebskapazität der Rohrleitung zu einer unerwünschten, nicht brauchbaren Blindleistung.

Für einen bevorzugt koaxial zu einem Mantelrohr im Inneren verlegten Innenleiter, beide mit einem jeweils kreisförmigen Querschnitt, kann gezeigt werden, dass sich die maximale Feldstärke auf der Oberfläche des Innenleiters ergibt zu:

$$E_a = \frac{V}{a \cdot \ln(b/a)}.$$

Dabei bezeichnet a den Radius des Innenleiters und b den Radius des Mantelrohrs. Im Falle eines Verhältnisses des Radius des Mantelrohrs b zum Radius des Innenleiters a, welches der Eulerschen Zahl e = 2,718 entspricht, reduziert sich die maximale Feldstärke auf der Oberfläche des Innenleiters zu

$$E_a = \frac{V}{a}.$$

Wird ein Mantelrohrdurchmesser von 3 m angenommen, und der Radius des Innenleiters entsprechend dem bevorzugten Verhältnis von e mit a = 0,55 m gewählt, so folgt hieraus für eine 800kV-Gleichspannung eine maximale Feldstärke auf der Oberfläche des Innenleiters von $E_a$ = 800kV/0,55m = 14,54kV/cm.

Eine solche Feldstärke liegt unterhalb eines kritischen Überschlagswertes in Luft von 30kV/cm. Weiter beträgt der Abstand zwischen dem Innenleiter und dem Mantelrohr vorliegend 0,95 m. Mit anderen Worten kann die luftisolierte Fernübertragungsleitung bei entsprechender Dimensionierung zum Übertragen einer Gleichspannung bis über 800 kV herangezogen werden. Dabei ist weiter zu berücksichtigen, dass der Innenleiter vor äußeren Einflüssen sicher im Inneren des Mantelrohrs geschützt verlegt ist.

Weiter kann gezeigt werden, dass unter der gegebenen Dimensionierung für eine 1.500 km lange Fernübertragungsleitung mit einer maximalen Feldstärke von 15 kV/cm bei einem Spannungsverlust von 5%, einem Mantelrohr aus Aluminium mit 1cm Wandstärke und einem Luftdruck im Inneren von etwa 1bar bei einer Gleichspannung von 800kV eine Leistung von 115 GW übertragen werden kann. Der angenommene Spannungsverlust beruht dabei auf dem Leitungsverlust eines koaxialen Übertragungssystems aufgrund des gegebenen ohmschen Widerstandes.

Die zweitgenannte Aufgabe wird durch einen Halteisolator zur beabstandeten Befestigung eines Innenleiters im Inneren eines Mantelrohrs erfindungsgemäß dadurch gelöst, dass er zur Justage des Abstands zwischen dem Innenleiter und dem Mantelrohr ausgebildet ist.

Weitere vorteilhafte Ausgestaltungen sind den auf einen Halteisolator gerichteten Unteransprüchen zu entnehmen. Die zu entsprechenden Ausgestaltungen der Fernübertragungsleitung genannten Vorteile können hierbei sinngemäß auf den Halteisolator übertragen werden.

Vorteilhafte Ausgestaltungen der Erfindung sind in einer Zeichnung näher erläutert. Dabei zeigen:

Fig. 1  schematisch einen Abschnitt einer Fernübertragungsleitung mit einem Innenleiter, der koaxial im Inneren eines Mantelrohrs verlegt ist,

Fig. 2  einen Querschnitt durch die Fernübertragungsleitung gemäß Fig. 1 am Ort der Halteisolatoren,

Fig. 3  eine vergrößerte Detailansicht aus Fig. 2, und

Fig. 4  im Detail Aufnahmebuchsen zur Aufnahme der Gewindeverbindungen der jeweiligen Halteisolatoren.

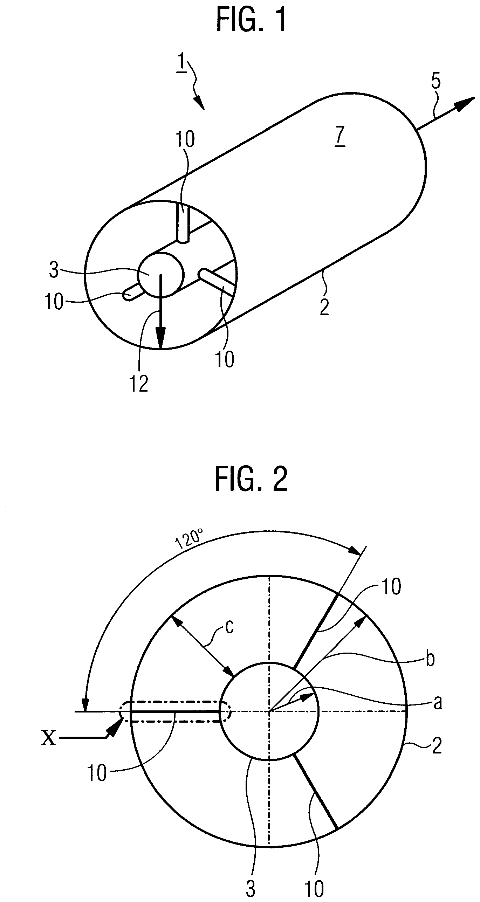

In Fig. 1 ist schematisch ein Abschnitt einer Fernübertragungsleitung 1 dargestellt, bei welcher im Inneren eines hohlzylindrischen Mantelrohrs 2 ein zylindrischer, massiver Innenleiter 3 verlegt ist. Der Innenleiter 3 ist hierbei koaxial zum Mantelrohr 2 verlegt. Alternativ ist der Innenleiter als ein Rohrleiter ausgebildet. Die Fernübertragungsleitung 1 erstreckt sich insgesamt entlang einer Längsrichtung 5. Zu sehen ist hierbei ein einzelnes Teilstück 7, wobei eine Vielzahl von Teilstücken 7 in Längsrichtung 5 beispielsweise durch Verschraubung oder Verschweißung zum Ausbilden der Fernübertragungsleitung 1 insgesamt aneinandergesetzt sind.

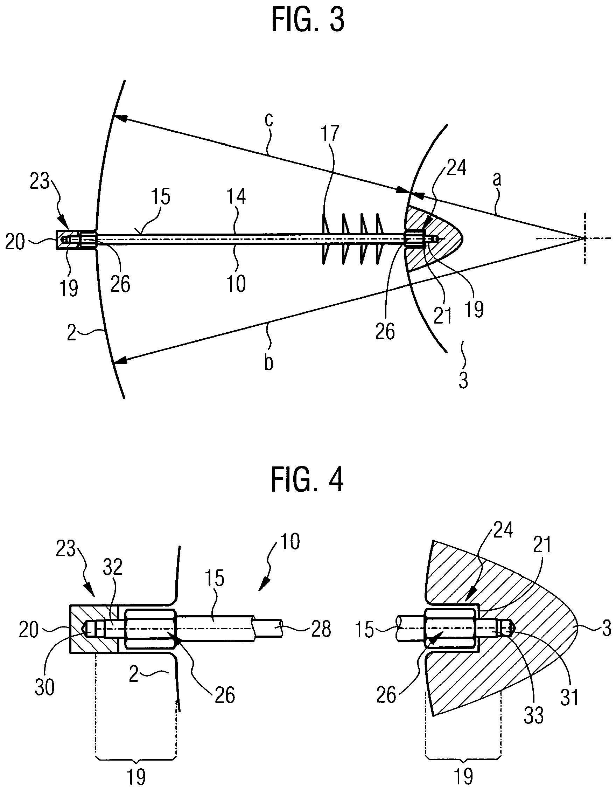

Sowohl das Mantelrohr 2 als auch der Innenleiter 3 sind aus Aluminium oder einer anderen elektrisch gut leitfähigen Leichtmetalllegierung gefertigt. In regelmäßigen Abständen entlang der Längsrichtung 5 ist der Innenleiter 3 mittels jeweils drei in Umfangsrichtung jeweils um 120° versetzt angeordneten Halteisolatoren 10 in einer Querrichtung 12 am Mantelrohr 2 gehalten und hierdurch von diesem beabstandet. Die Halteisolatoren 10 sind jeweils als sogenannte Stabisolatoren gefertigt, die an einem Ende mit dem Innenleiter 3 und am anderen Ende mit dem Mantelrohr 2 fest verbunden sind. Die Halteisolatoren 10 sind jeweils zur Justage des Abstands zwischen dem Innenleiter 3 und dem Mantelrohr 2 ausgebildet, wie es aus den Fig. 3 und 4 ersichtlich wird.

Die Fernübertragungsleitung 1 ist im Inneren mit Luft von etwa 1bar, d.h. Atmosphärendruck, gefüllt. Der Innenleiter 3 befindet sich dabei auf einer DC-Hochspannung. Das Mantelrohr 2 ist geerdet.

In Fig. 2 ist ein Querschnitt durch die Fernübertragungsleitung 1 gemäß Fig. 1 am Ort der Halteisolatoren 10 dargestellt. Man erkennt den Innenleiter 3 mit einem Radius a, der koaxial mittels der Halteisolatoren 10 im Inneren des Mantelrohrs 2 mit einem Radius b gehalten ist. Der sich hieraus ergebende Abstand zwischen dem Innenleiter 3 und dem Mantelrohr 2 ist mit dem Buchstaben c bezeichnet. Die drei Halteisolatoren 10 sind symmetrisch in Umfangsrichtung um den Innenleiter 3 herum verteilt. Mit anderen Worten beträgt der Winkel zwischen zwei benachbarten Halteisolatoren 10 jeweils 120°.

Die vorliegend konzipierte Fernübertragungsleitung 1 ist für die Übertragung einer Gleichspannung zwischen etwa 500 kV bis 800 kV konzipiert. Der Radius b des Mantelrohrs 2 beträgt 1,5 m. Der Radius a des vorliegend massiven Innenleiters beträgt 0,55 m. Der Abstand c zwischen dem Innenleiter 3 und dem Mantelrohr 2 beläuft sich demnach auf 0,95 m. Das Verhältnis b/a entspricht der Eulerschen Zahl e.

Das Detail X eines Halteisolators 10 aus Fig. 2 ist in Fig. 3 vergrößert gezeichnet. Jeder Halteisolator 10 ist als ein so genannter Verbundisolator ausgestaltet, der einen in Querrichtung 12 verlaufenden, stabförmigen Isolierkörper 14 aus einem glasfaserverstärktem Kunststoff umfasst. Auf dem Isolierkörper 14 ist zur Erhöhung der Isolierfähigkeit eine Isoliermasse 15 aus einem Silikonkautschuk aufgetragen. Zur Erhöhung des Kriechweges zwischen den beiden Enden des Halteisolators 10 sind abschnittsweise tellerförmige Schirme 17 aus dem Silikonkautschuk geformt. Die Isoliermasse 15 mit den ausgeformten Schirmen ist hierbei dem Isolierkörper 14 aufgespritzt.

An den beiden Enden des Halteisolators 10 befindet sich jeweils eine Metallarmatur 19, die im Wesentlichen der Befestigung mit dem Innenleiter 3 bzw. mit dem Mantelrohr 2 dient. Zur Befestigung des Halteisolators 10 bzw. seiner Enden sind in das Mantelrohr 2 äußere Aufnahmebuchsen 20 eingeformt und in den vorliegend massiven Innenleiter 3 innere Aufnahmebuchsen 21 eingesenkt. Im Inneren der Aufnahmebuchsen 20, 21 sind dabei im Zusammenspiel mit den Metallarmaturen 19 des Halteisolators 10 äußere Gewindeverbindungen 23 bzw. innere Gewindeverbindungen 24 ausgebildet. Die genaue Ausgestaltung wird aus Fig. 4 ersichtlich.

Die äußere Gewindeverbindung 23 und die innere Gewindeverbindung 24 sind mit zueinander entgegengesetztem Drehsinn ausgebildet. Je nach Drehung des Halteisolators 10 findet demnach entweder ein Eindrehen in die beiden Aufnahmebuchsen 20, 21 oder ein Ausdrehen aus den beiden Aufnahmebuchsen 20, 21 statt. Der Halteisolator 10 wirkt insofern als ein Spannschluss für die Justage des Innenleiters 3 im Inneren des Mantelrohrs 2. Zum Verdrehen des Halteisolators 10 sind die beiden Metallarmaturen 19 jeweils mit einem Mehrkant 26 versehen. Dieser kann mit einem Ringschlüssel umfasst und entsprechend mit dem Halteisolator verdreht werden. Die Metallarmaturen 19 sind einschließlich des Mehrkants 26 jeweils durch eine kombinierte Schrumpf/Klebeverbindung mit den jeweiligen Strunkenden des Isolierkörpers 14 fest verbunden. Die genaue Ausgestaltung der Gewindeverbindungen 23, 24 wird aus Fig. 4 ersichtlich.

Sowohl die in die Wand des Mantelrohrs 2 eingeformten äußeren Aufnahmebuchsen 20 als auch die in den Innenleiter 3 eingeformten inneren Aufnahmebuchsen 21 weisen jeweils Gewindebohrungen 30, 31 auf. In diese Bohrungen 30, 31 werden die Gewinde 32 bzw. 33 der als Gewindebolzen bzw. Gewindestangen ausgebildeten Metallarmaturen 19 eines jeden Halteisolators 10 je nach Drehrichtung ein- bzw. ausgeschraubt. Die Gewinde 32 bzw. 33 der Gewindebolzen der Metallarmaturen 19 weisen zueinander jeweils einen entgegengesetzten Drehsinn auf. Die Gewindebolzen jeder Metallarmatur19 enden isolatorseitig jeweils in einem Mehrkant 26 zur Drehung des Halteisolators 10. In montiertem Zustand sind die Metallarmaturen 19 in die jeweiligen Aufnahmebuchsen 20, 21 samt Mehrkant 26 eingeschraubt. Hierzu weist jede Aufnahmebuchse 20,21 ein zylinderförmiges Sackloch auf, in das der jeweilige Mehrkant 26 in eingeschraubtem Zustand eintaucht. Die isolatorseitige Abschlusskante des jeweiligen Mehrkants 19 fluchtet dann in etwa mit der Auslaufkante der entsprechenden Aufnahmebuchsen 20, 21. Die eintauchende Länge der Metallarmaturen 19 ist in Fig. 4 entsprechend eingezeichnet. Der eingetauchte Mehrkant 26 wirkt als ein Entladungs- oder Koronaschutz für die jeweilige Metallarmatur 19. In Fig. 4 ist ferner der den stabförmigen Isolierkörper 14 bildende Strunk 28 eingezeichnet, auf den die Isoliermasse 15 aufgetragen ist.

Bezugszeichenliste

| | |
|---|---|
| 1 | Fernübertragungsleitung |
| 2 | Mantelrohr |
| 3 | Innenleiter |
| 5 | Längsrichtung |
| 7 | Teilstück |
| 10 | Halteisolator |
| 12 | Querrichtung |
| 14 | Isolierkörper |
| 15 | Isoliermasse |
| 17 | Schirme |
| 19 | Metallarmatur |
| 20 | äußere Aufnahmebuchse |
| 21 | innere Aufnahmebuchse |
| 23 | äußere Gewindeverbindung |
| 24 | innere Gewindeverbindung |
| 26 | Mehrkant |
| 28 | Strunk |
| 30 | Gewindebohrung |
| 31 | Gewindebohrung |
| 32 | Gewinde |
| 33 | Gewinde |
| a | Radius Innenleiter |
| b | Radius Mantelrohr |
| c | Abstand Innenleiter-Mantelrohr |

**Patentansprüche**

**1.** Halteisolator (10) zur beabstandeten Befestigung eines Innenleiters (3) im Inneren eines Mantelrohrs (2) einer Fernübertragungsleitung (1), der einen im Wesentlichen stabförmigen Isolierkörper (14) umfasst, der beidendseitig jeweils ein Gewinde (32, 33) aufweist

**dadurch gekennzeichnet,**

**dass** er zur Justage des Abstands zwischen dem Innenleiter (3) und dem Mantelrohr (2) ausgebildet ist,

**dass** die beiden Gewinde (32, 33) zueinander einen entgegengesetzten Drehsinn aufweisen,

**dass** er als ein Verbundisolator mit einem im Wesentlichen stabförmigen Glasfaserstrunk (28) und mit einer darauf aufgebrachten Isoliermasse (15), insbesondere aus einem Silikonkautschuk, ausgeführt ist,

**dass** zur Verschraubung beidendseitig jeweils eine Metallarmatur (19) mit Gewinde (32,33) vorgesehen ist, und

**dass** an den Metallarmaturen (19) jeweils ein Mehrkant (26) zur Drehung ausgebildet ist.

2. Halteisolator (10) nach Anspruch 1,
**dadurch gekennzeichnet,**
**dass** der Mehrkant (26) die jeweilige Metallarmatur (19) am Strunk (28) befestigt ist, wobei der Mehrkant (26) zumindest teilweise über das Strunkende geschoben, und dem Strunkende aufgepresst und/oder aufgeklebt ist.

3. Fernübertragungsleitung (1) für Hochspannung mit einem sich in einer Längsrichtung (5) erstreckenden äußeren Mantelrohr (2), mit einem im Inneren des Mantelrohrs (2) parallel zur Längsrichtung (5) geführten Innenleiter (3) und mit einer Anzahl von Halteisolatoren (10) gemäß einem der vorhergehenden Ansprüche, über die der Innenleiter (3) quer zur Längsrichtung (5) am Mantelrohr (2) und von diesem beabstandet über Halteisolatoren (10) gehalten ist und die Halteisolatoren (10) im Wesentlichen stabförmig ausgebildet und mit dem Innenleiter (3) sowie dem Mantelrohr (2) jeweils über eine Gewindeverbindung (23, 24) verschraubt sind
**dadurch gekennzeichnet,**
**dass** die Halteisolatoren (10) zur Justage des Abstands zwischen dem Innenleiter (3) und dem Mantelrohr (2) ausgebildet sind, dass, die Gewindeverbindungen (23, 24) am Innenleiter (3) und am Mantelrohr (2) zueinander einen entgegengesetzten Drehsinn aufweisen, dass die Halteisolatoren (10) jeweils als Verbundisolatoren mit einem im Wesentlichen stabförmigen Glasfaserstrunk (28) und mit einer darauf aufgebrachten Isoliermasse (15) ausgeführt sind, wobei die Halteisolatoren (10) beidendseitig jeweils eine Metallarmatur (19) mit einem Gewinde (32, 33) aufweisen, wobei an den Metallarmaturen (19) jeweils ein Mehrkant (26) zur Drehung des jeweiligen Halteisolators (10) ausgebildet ist, dass das Mantelrohr (2) eine Anzahl von nach außen gerichteten Aufnahmebuchsen (20) umfasst, in die jeweils die äußeren Gewindeverbindungen (23) der Halteisolatoren (10) aufgenommen sind,
**dass** der Innenleiter (3) eine Anzahl von nach innen gerichteten Aufnahmebuchsen (21) umfasst, in die jeweils die inneren Gewindeverbindungen (24) der Halteisolatoren (10) aufgenommen sind, und dass in den Aufnahmebuchsen (20, 21) die Mehrkante (26) der Halteisolatoren (10) aufgenommen sind, wobei die Mehrkante (26) jeweils mindestens so weit eintauchen, dass ihre isolatorseitigen Endkanten mit den jeweiligen Auslaufkanten der Aufnahmebuchsen (20, 21) fluchten.

4. Fernübertragungsleitung (1) nach Anspruch 3,
**dadurch gekennzeichnet,**
**dass** der Mehrkant (26) die jeweilige Metallarmatur (19) am Strunk (28) der Verbundisolatoren befestigt, wobei der Mehrkant (26) zumindest teilweise über das Strunkende geschoben, und dem Strunkende aufgepresst und/oder aufgeklebt ist.

5. Fernübertragungsleitung (1) nach Anspruch 3 oder 4,
**dadurch gekennzeichnet,**
**dass** der Innenleiter (3) gegenüber dem Mantelrohr (2) luftisoliert ist.

6. Fernübertragungsleitung (1) nach einem der Ansprüche 3 bis 5,
**dadurch gekennzeichnet,**
**dass** der Innenleiter (3) im Wesentlichen koaxial zum Mantelrohr (2) gehalten ist.

7. Fernübertragungsleitung (1) nach einem der Ansprüche 3 bis 6,
**dadurch gekennzeichnet,**
**dass** der Innenleiter (3) und das Mantelrohr (2) jeweils einen kreisförmigen Querschnitt aufweisen, und dass das Verhältnis des Radius des Mantelrohrs (2) zum Radius des Innenleiters (3) der Eulerschen Zahl e entspricht.

**Claims**

1. Mounting insulator (10) for fixing an inner conductor (3) at a distance in the interior of a jacket tube (2) of a long-distance transmission line (1), which comprises a substantially rod-like insulating body (14) that has a respective thread (32, 33) at both ends,
**characterized in that**
it is designed to adjust the distance between the inner conductor (3) and the jacket tube (2),
**in that** the two threads (32, 33) have an opposite direction of rotation relative to each other,
**in that** it is implemented as a composite insulator having a substantially rod-like glass fibre core (28) and having an insulating compound (15) applied thereto, in particular made of silicone rubber,
**in that** a metal fitting (19) with a thread (32, 33) is respectively provided at both ends for screw fixing, and
**in that** a polygon (26) for rotation is respectively formed on the metal fittings (19).

2. Mounting insulator (10) according to Claim 1,
**characterized in that**
the polygon (26) fixes the respective metal fitting (19) to the core (28), the polygon (26) being pushed at least partly over the core end and being pressed and/or bonded onto the core end.

3. Long-distance transmission line (1) for high voltage having an outer jacket tube (2) extending in a longitudinal direction (5), having an inner conductor (3) guided in the interior of the jacket tube (2), parallel to the longitudinal direction (5), and having a number of mounting insulators (10) according to one of the preceding claims, via which the inner conductor (3) is held on the jacket tube (2) transversely with respect to the longitudinal direction (5) and spaced apart from the jacket tube (2) via mounting insulators (10), and the mounting insulators (10) being substantially rod-like and screwed to the inner conductor (3) and the jacket tube (2) respectively via a threaded connection (23, 24),
**characterized in that**
the mounting insulators (10) are designed to adjust the distance between the inner conductor (3) and the jacket tube (2),
**in that** the threaded connections (23, 24) on the inner conductor (3) and on the jacket tube (2) have an opposite direction of rotation relative to each other,
**in that** the mounting insulators (10) are each implemented as composite insulators having a substantially rod-like glass fibre core (28) and having an insulating compound (15) applied thereto, the mounting insulators (10) each having at both ends a metal fitting (19) with a thread (32, 33), a polygon (26) for rotating the respective mounting insulator (10) being respectively formed on the metal fittings (19),
**in that** the jacket tube (2) comprises a number of receiving bushes (20) directed outwards, in which the outer threaded connections (23) of the mounting insulators (10) are respectively accommodated,
**in that** the inner conductor (3) comprises a number of receiving bushes (21) directed inwards, in which the inner threaded connections (24) of the mounting insulators (10) are respectively accommodated, and
**in that** the polygons (26) of the mounting insulators (10) are accommodated in the receiving bushes (20, 21), the polygons (26) each being immersed at least so far that their end edges on the insulator side are aligned with the respective outlet edges of the receiving bushes (20, 21).

4. Long-distance transmission line (1) according to Claim 3,
**characterized in that**
the polygon (26) fixes the respective metal fitting (19) to the core (28) of the composite insulators, the polygon (26) being pushed at least partly over the core end and pressed and/or bonded onto the core end.

5. Long-distance transmission line (1) according to Claim 3 or 4,
**characterized in that**
the inner conductor (3) is air-insulated with respect to the jacket tube (2).

6. Long-distance transmission line (1) according to one of Claims 3 to 5,
**characterized in that**
the inner conductor (3) is held substantially coaxially with respect to the jacket tube (2).

7. Long-distance transmission line (1) according to one of Claims 3 to 6,
**characterized in that**
the inner conductor (3) and the jacket tube (2) each have a circular cross section, and **in that** the ratio of the radius of the jacket tube (2) to the radius of the inner conductor (3) corresponds to Euler's number e.

**Revendications**

1. Isolateur de retenue (10) destiné à fixer à distance un conducteur intérieur (3) à l'intérieur d'un tube de gainage (2) d'une ligne de transmission à distance (1), lequel isolateur de retenue comprend un corps isolant (14) sensiblement en forme de barre qui comporte aux deux extrémités un filetage (32, 33),
**caractérisé en ce que**
il est conçu pour ajuster la distance entre le conducteur intérieur (3) et le tube de gainage (2),
les deux filetages (32, 33) ont des sens de rotation opposés l'un à l'autre,
il est conçu sous la forme d'isolateur composite comportant un fût isolant (28) en fibre de verre sensiblement en forme de barre et un composé isolant (15), en particulier en caoutchouc de silicone, qui est appliqué sur celui-ci,
un raccord métallique (19) pourvu d'un filetage (32, 33) est prévu pour le raccordement par vissage et un polygone (26) est formé sur chacun des raccords métalliques (19) en vue de la rotation.

2. Isolateur de retenue (10) selon la revendication 1,
**caractérisé en ce que**
le polygone (26) fixe le raccord métallique respectif (19) au fût isolant (28), le polygone (26) étant poussé au moins partiellement sur l'extrémité du fût isolant et emmanché par pression et/ou collé sur l'extrémité du fût isolant.

3. Ligne de transmission à distance (1) à haute tension comprenant un tube de gainage extérieur (2) qui s'étend dans une direction longitudinale (5), un conducteur intérieur (3) guidé à l'intérieur du tube de gainage (2) parallèlement à la direction longitudinale (5) et un certain nombre d'isolateurs de retenue (10) selon l'une des revendications précédentes, par le biais desquels le conducteur intérieur (3) est maintenu sur le tube de gainage (2) transversalement à la direction longitudinale (5) et à distance de celui-ci par des isolateurs de retenue (10) et les isolateurs de retenue (10) sont conçus sensiblement sous la forme de barre et vissés au conducteur intérieur (3) et au tube de gainage (2) à chaque fois par une liaison filetée (23, 24),
**caractérisée en ce que**
les isolateurs de retenue (10) sont conçus pour ajuster la distance entre le conducteur intérieur (3) et le tube de gainage (2),
les liaisons filetées (23, 24) ont sur le conducteur intérieur (3) et sur le tube de gainage (2) des sens de rotation opposés l'un à l'autre,
les isolateurs de retenue (10) sont conçus chacun comme des isolateurs composites comprenant un fût isolant (28) en fibre de verre sensiblement en forme de barre et un composé isolant (15) appliqué sur celui-ci, les isolateurs de retenue (10) comportant chacun un raccord métallique (19) pourvu d'un filetage (32, 33), un polygone (26) étant formé sur le raccord métallique (19) pour faire tourner l'isolateur de retenue respectif (10),
le tube de gainage (2) comprend un certain nombre de douilles de réception (20) dirigées vers l'extérieur dans lesquelles les liaisons filetées extérieures respectives (23) des isolateurs de retenue(10) sont reçues,
le conducteur intérieur (3) comprend un certain nombre de douilles de réception (21) dirigées vers l'intérieur dans lesquelles les liaisons filetées intérieures (24) des isolateurs de retenues (10) sont respectivement reçues, et
les polygones (26) des isolateurs de retenue (10) sont reçus dans les douilles de réception (20, 21), les polygones (26) pénétrant chacun au moins jusqu'à ce que leurs bords d'extrémité côté isolateur soient alignés avec les bords de sortie respectifs des douilles de réception (20, 21).

4. Ligne de transmission à distance (1) selon la revendication 3,
**caractérisée en ce que**
le polygone (26) fixe le raccord métallique respectif (19) au fût isolant (28) des isolateurs composites, le polygone (26) étant poussé au moins partiellement sur l'extrémité du fût isolant et emmanché par pression et/ou collé sur le fût isolant.

5. Ligne de transmission à distance (1) selon la revendication 3 ou 4,
**caractérisée en ce que**
le conducteur intérieur (3) est isolé par de l'air par rapport au tube de gainage (2).

6. Ligne de transmission à distance (1) selon l'une des revendications 3 à 5,
**caractérisée en ce que**
le conducteur intérieur (3) est maintenu sensiblement coaxialement au tube de gainage (2).

7. Ligne de transmission à distance (1) selon l'une des revendications 3 à 6,
**caractérisée en ce que**
le conducteur intérieur (3) et le tube de gainage (2) ont chacun une section transversale circulaire et le rapport du rayon du tube de gainage (2) au rayon du conducteur intérieur (3) correspond du nombre d'Euler e.

## FIG. 1

## FIG. 2

# FIG. 3

# FIG. 4

**IN DER BESCHREIBUNG AUFGEFÜHRTE DOKUMENTE**

**In der Beschreibung aufgeführte Patentdokumente**

- US 3712953 A
- EP 0572096 A1

**In der Beschreibung aufgeführte Nicht-Patentliteratur**

- **JOSEF KINDERSBERGER.** Gasisolierter Rohrleiter (GIL) für Hochspannungsübertragungen. *IEEE Joint IAS/PELS/IES and PES German Chapter Meeting*